(19) Europäisches Patentamt
European Patent Office
Office européen des brevets

(11) **EP 4 459 717 A1**

(12) **EUROPEAN PATENT APPLICATION**
published in accordance with Art. 153(4) EPC

(43) Date of publication:
06.11.2024 Bulletin 2024/45

(21) Application number: 23860926.7

(22) Date of filing: 31.08.2023

(51) International Patent Classification (IPC):
H01M 4/58 (2010.01)          H01M 4/36 (2006.01)
H01M 4/62 (2006.01)          H01M 4/04 (2006.01)
H01M 10/0525 (2010.01)          H01M 4/02 (2006.01)

(52) Cooperative Patent Classification (CPC):
H01M 4/02; H01M 4/04; H01M 4/136;
H01M 4/1397; H01M 4/36; H01M 4/58; H01M 4/62;
H01M 10/052; H01M 10/0525; Y02E 60/10

(86) International application number:
PCT/KR2023/013029

(87) International publication number:
WO 2024/049251 (07.03.2024 Gazette 2024/10)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 31.08.2022 KR 20220110412

(71) Applicant: LG Energy Solution, Ltd.
Seoul 07335 (KR)

(72) Inventors:
• **JUNG, Byoung-Hyo**
**Daejeon 34122 (KR)**
• **KIM, Hak-Yoon**
**Daejeon 34122 (KR)**
• **PARK, Moon-Soo**
**Daejeon 34122 (KR)**
• **JANG, Min-Chul**
**Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE AND ELECTROCHEMICAL DEVICE INCLUDING SAME**

(57)     The present disclosure relates to a positive electrode active material for an electrochemical device. The positive electrode active material is a positive electrode granule including a positive electrode active material and a binder, wherein the positive electrode active material includes a lithium iron phosphate-based compound, the positive electrode active material is bound by the binder, the binder is distributed uniformly at the central portion and surface portion of the positive electrode granule, and the surface portion is a region near the granule surface from the granule surface to a predetermined depth toward the center of the granule, and the central portion is a region other than the surface portion.

FIG. 1

**Description**

TECHNICAL FIELD

The present disclosure relates to a positive electrode and an electrochemical device including the same.
The present application claims priority to Korean Patent Application No. 10-2022-0110412 filed on August 31, 2022 in the Republic of Korea, the disclosures of which are incorporated herein by reference.

BACKGROUND ART

Due to a rapid increase in use of fossil fuel, there has been an increasing need for use of substitute energy and clean energy. The most actively studied field as a part of attempts to meet such a need is the field of power generation and power storage using electrochemistry. Currently, typical examples of electrochemical devices using electrochemical energy include secondary batteries, and application thereof has been extended gradually.
Among such secondary batteries, lithium secondary batteries having high energy density and voltage, long cycle life and low self-discharge rate have been commercialized and used widely. A lithium secondary battery has been used not only as an energy source of mobile instruments but also as a power source of electric vehicles and hybrid electric vehicles capable of substituting for vehicles, such as gasoline vehicles and diesel vehicles, using fossil fuel and regarded as one of the main causes of air pollution, recently. In addition, application of such a lithium secondary battery has been extended even to a supplementary power source of electric power through the formation into a grid.
Lithium transition metal composite oxides have been used as positive electrode active materials for lithium secondary batteries. Particularly, lithium cobalt oxide, $LiCoO_2$, showing a high applicable voltage and excellent capacity characteristics, has been used frequently. However, $LiCoO_2$ shows very poor thermal properties due to the non-stabilization of crystal structure caused by delithiation and is expensive, and thus there is a limitation in using a large amount of $LiCoO_2$ as a power source for electric vehicles.
As a material substituting for $LiCoO_2$, there have been developed lithium manganese composite metal oxides ($LiMnO_2$ or $LiMn_2O_4$, etc.), lithium iron phosphate-based compounds ($LiFePO_4$, etc.) or lithium nickel composite metal oxides ($LiNiO_2$, etc.), or the like. Among such materials, lithium iron phosphate-based compounds have been given an increasing attention as a material capable of substituting for $LiCoO_2$ in terms of low cost, abundance of iron resources and eco-friendly characteristics. In addition, it is reported that lithium iron phosphate has excellent thermal stability by virtue of the strong covalent bonding of P-O to cause less problems about oxygen elution as compared to the conventional positive electrode active material including $LiCoO_2$, $LiNiO_2$ and $LiMnO_4$, and undergoes less rearrangement of crystal lattices to provide structural stability.
However, a lithium secondary battery using such a lithium iron phosphate (LFP)-based compound is problematic in that HF is produced while $LiPF_6$ salt is hydrolyzed by water ($H_2O$) present in the battery, and the formed HF causes Fe elution in the LFP active material, resulting in degradation of the durability of the battery. In addition, there is another problem in that the eluted Fe migrates to the negative electrode to cause damages upon the solid electrolyte interphase (SEI) layer on the active material surface, and is deposited on the negative electrode to reduce reactive sites, resulting in degradation of the life of the battery.
In addition, such an LFP material is problematic it that it has a structure in which oxygen atoms are bound strongly through a hexagonal close packed structure to interrupt and limit smooth Li ion migration and cannot allow smooth electron flow due to its low electrical conductivity. Therefore, it is required to improve the above-mentioned problems so that the LFP material may be utilized. For this purpose, some studies have been conducted to control the lithium diffusion rate by adjusting the particle size, or to improve the electrical conductivity by coating the surface with another transition metal or carbon. However, the active material has a small particle diameter to provide a high surface area, the surface-coated carbon has defects, and water is hardly removed once it is adsorbed on the defected sites.
Meanwhile, the LFP active material is inevitably exposed to the external air in the process for manufacturing a battery. Herein, when water adsorbed on the active material is inhibited, it is expected that the battery using the active material may provide improved life characteristics. Therefore, there is a need for developing a novel type of LFP active material to inhibit water adsorbed on the surface.

DISCLOSURE

Technical Problem

The present disclosure is designed to solve the problems of the related art, and therefore the present disclosure is directed to providing a novel type of positive electrode active material including a lithium iron phosphate-based material and inhibiting water adsorption on the surface, and a method for preparing the same.

The present disclosure is also directed to providing a method for preparing a positive electrode active material having the above-described characteristics.

In addition, the present disclosure is directed to providing an electrochemical device, such as a lithium secondary battery, having improved life characteristic by inhibiting water adsorption on the surface of the positive electrode active material.

Technical Solution

In one aspect of the present disclosure, there is provided a positive electrode granule according to any one of the following embodiments.

According to the first embodiment of the present disclosure, there is provided a positive electrode granule including a positive electrode active material and a binder,

wherein the positive electrode active material includes a lithium iron phosphate-based compound,
the positive electrode active material is bound by the binder,
the binder is distributed uniformly at the central portion and surface portion of the positive electrode granule, and
the surface portion is a region near the granule surface from the granule surface to a predetermined depth toward the center of the granule, and the central portion is a region other than the surface portion.

According to the second embodiment of the present disclosure, there is provided the positive electrode granule as defined in the first embodiment, wherein the binder may include a hydrophobic binder.

According to the third embodiment of the present disclosure, there is provided the positive electrode granule as defined in the first or the second embodiment, which may include:

a main domain having a dented portion from the surface to a predetermined depth toward the center;
a sub-domain disposed in the dented portion; and
a hollow portion formed between the main domain and the sub-domain.

According to the fourth embodiment of the present disclosure, there is provided the positive electrode granule as defined in any one of the first to the third embodiments, which may have an average particle diameter ($D_{50}$) of 20-300 $\mu$m.

According to the fifth embodiment of the present disclosure, there is provided the positive electrode granule as defined in any one of the first to the fourth embodiments, which may have a QBR (Quantified Binder Ratio) value ranging from 0.8 to 1.2, as determined according to the following formula 1:

$$[Formula\ 1]$$

$$QBR = Bs/Bf,$$

wherein Bs represents the average value of binder content in the region between the outermost surface of the positive electrode granule and up to 15% of the particle radius of the positive electrode granule, and Bf represents the average value of binder content in the region between the internal center of the positive electrode granule and up to 15% of the particle radius of the positive electrode granule.

According to the sixth embodiment of the present disclosure, there is provided the positive electrode granule as defined in any one of the first to the fifth embodiments, wherein the dented portion of the positive electrode granule may have a circular shape with a dimeter ($D_{50}$) of 10-150 $\mu$m.

According to the seventh embodiment of the present disclosure, there is provided the positive electrode granule as defined in any one of the first to the sixth embodiments, wherein the binder may include a fluorine-based binder.

According to the eighth embodiment of the present disclosure, there is provided the positive electrode granule as defined in any one of the first to the seventh embodiments, wherein the binder may include polyvinylidene fluoride (PVDF), polyvinylidene fluoride-co-hexafluoropropylene (PVDF-HFP), polytetrafluoroethylene (PTFE), or a mixture of two or more of them.

According to the ninth embodiment of the present disclosure, there is provided the positive electrode granule as defined in any one of the first to the eighth embodiments, which may further include a conductive material, and the positive electrode active material and the conductive material are bound by the binder.

In another aspect of the present disclosure, there is provided a method for preparing a positive electrode granule according to any one of the following embodiments.

According to the tenth embodiment of the present disclosure, there is provided a method for preparing a positive electrode granule, including the steps of:

adding a positive electrode active material and a binder to a dispersion medium to prepare a slurry; and
spray drying the slurry,
wherein the positive electrode active material includes a lithium iron phosphate-based compound.

According to the eleventh embodiment of the present disclosure, there is provided the method for preparing a positive electrode granule as defined in the tenth embodiment, wherein the binder may include a hydrophobic binder.

According to the twelfth embodiment of the present disclosure, there is provided the method for preparing a positive electrode granule as defined in the tenth or the eleventh embodiment, wherein the binder may include a fluorine-based binder.

According to the thirteenth embodiment of the present disclosure, there is provided the method for preparing a positive electrode granule as defined in any one of the tenth to the twelfth embodiments, wherein the binder may include polyvinylidene fluoride (PVDF), polyvinylidene fluoride-co-hexafluoropropylene (PVDF-HFP), polytetrafluoroethylene (PTFE), or a mixture of two or more of them.

In still another aspect of the present disclosure, there is provided a positive electrode according to the following embodiment.

According to the fourteenth embodiment of the present disclosure, there is provided a positive electrode, including a current collector, and a positive electrode active material layer disposed on the current collector, wherein the positive electrode active material layer includes a plurality of the positive electrode granules as defined in any one of the first to the ninth embodiments.

In yet another aspect of the present disclosure, there is provided an electrochemical device including a positive electrode, a negative electrode, a separator interposed between the positive electrode and the negative electrode, and an electrolyte, wherein the positive electrode includes the positive electrode as defined in the fourteenth embodiment.

Advantageous Effects

The positive electrode active material according to an embodiment of the present disclosure inhibits adsorption of water on the surface thereof, and thus provides improved life characteristics to the electrochemical device using the same.

The method for preparing a positive electrode active material according to another embodiment of the present disclosure provides a positive electrode active material, a positive electrode and an electrochemical device having the above-mentioned characteristics.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a scanning electron microscopic (SEM) image illustrating the positive electrode granule according to an embodiment of the present disclosure.
FIG. 2 is an SEM image illustrating the positive electrode granule according to an embodiment of the present disclosure.
FIG. 3 is a graph illustrating the test result of life characteristics of the positive electrodes according to Examples 1 and 2 and Comparative Example 1.

BEST MODE

Hereinafter, preferred embodiments of the present disclosure will be described in detail. However, the description proposed herein is just a preferable example for the purpose of illustrations only, not intended to limit the scope of the disclosure, and each constitutional element may be changed diversely or combined selectively. Therefore, it should be understood that other changes, equivalents and modifications could be made thereto without departing from the scope of the disclosure.

Throughout the specification, the expression 'a part includes an element' does not preclude the presence of any additional elements but means that the part may further include the other elements.

As used herein, the expression 'A and/or B' means 'A, B or both of them'.

In one aspect of the present disclosure, there is provided a positive electrode material that may be used for an electrochemical device, such as a lithium secondary battery.

The positive electrode material is a positive electrode granule including a positive electrode active material and a binder, wherein the positive electrode active material includes a lithium iron phosphate-based compound, the positive electrode active material is bound by the binder, the binder is distributed uniformly at the central portion and surface portion of the positive electrode granule, the surface portion is a region near the granule surface from the granule surface to a predetermined depth toward the center of the granule, and the central portion is a region other than the surface portion.

The granule(s) refers to a composite particle including a positive electrode active material and a binder. Particularly, the granule has a shape of a group of particles, wherein the positive electrode active material is bound by the binder. As described hereinafter, the granule may further include a conductive material. When the granule further includes a conductive material, the granule may have a shape of a group of particles, wherein the positive electrode active material and the conductive material are bound by the binder. A plurality of such positive electrode granules may be used to form a positive electrode active material layer through a series of steps.

In the positive electrode granule, the binder is distributed uniformly in the central portion and the surface portion. According to an embodiment of the present disclosure, the surface portion may refer to a region between the granule surface and 70% or more, preferably 85% or more, 90% or more, or 95% or more of the radius from the center of the particle diameter of the granule, and the central portion may refer to a region other than the surface portion.

The granule will be explained in more detail. A plurality of positive electrode active material particles form an aggregate while being in contact with one another through surface contact, linear contact, dot-like contact, or two or more contact modes of them, and are distributed uniformly throughout the granule. In addition, the binder is distributed throughout the granule so that the uniformly distributed positive electrode active materials may be bound. In this manner, the positive electrode active materials in the granule may be fixed and bound with one another.

According to an embodiment of the present disclosure, the granule may have an aspect ratio of 0.5-1.0. The aspect ratio refers to the ratio of the average longer axis length based on the average shorter axis length of the granules. Herein, the average shorter axis length refers to the average value of lengths in the direction of the axis having the shortest length in the granule, and the average longer axis length refers to the average value of lengths in the direction of the axis having the longest length in the granule. When the aspect ratio of the granule satisfies the above-defined range, there is an advantage in that the granule has sufficient flowability suitable for the process.

According to an embodiment of the present disclosure directed to providing a positive electrode material including a lithium iron phosphate-based material, the positive electrode active material includes a lithium iron phosphate-based compound.

According to an embodiment of the present disclosure, typical examples of the lithium iron phosphate-based compound include: lithium iron phosphate (LFP) represented by the chemical formula of $LiFePO_4$; lithium iron-metal-phosphate (LMFP) represented by the chemical formula of $LiFe_xM1_{(1-x)}P_yM2_{(1-y)}O_4$ (wherein M1 represents at least one selected from Mn, Co, Ni, Al, V, B, Cd, Cu, Mg, Zn, Ti, Nb, Zr and Cr, $0 < x \leq 1$, M2 represents at least one selected from Si, N, S, Cl, Br and F, and $0 < y \leq 1$); or a mixture thereof. According to an embodiment of the present disclosure, the lithium iron phosphate-based compound may include a compound represented by the chemical formula of $LiFePO_4$.

According to an embodiment of the present disclosure, the positive electrode active material may further include a material that may be used conventionally for a positive electrode for an electrochemical device, besides the lithium iron phosphate-based compound. For example, besides the lithium iron phosphate-based compound, the positive electrode active material may further include, but are not limited to: lithium transition metal oxides; lithium metal iron phosphates, lithium nickel-manganese-cobalt oxides; lithium nickel-manganese-cobalt oxides partially substituted with other transition metals; or two or more of them. Particularly, besides the lithium iron phosphate-based compound, the positive electrode active material may further include, but are not limited to: layered compounds, such as lithium cobalt oxide $(LiCoO_2)$ and lithium nickel oxide$(LiNiO_2)$, or those compounds substituted with one or more transition metals; lithium manganese oxides, such as $Li_{1+x}Mn_{2-x}O_4$ (wherein x is 0-0.33), $LiMnO_3$, $LiMn_2O_3$ and $LiMnO_2$; lithium coper oxide $(Li_2CuO_2)$; vanadium oxides, such as $LiVsOs$, $LiV_3O_4$, $V_2O_5$ or $Cu_2V_2O_7$; Ni site-type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); lithium metal phosphates, $LiMPO_4$ (wherein M is Fe, CO, Ni or Mn); lithium nickel-manganese-cobalt oxides $Li_{1+x}(Ni_aCo_bMn_c)_{1-x}O_2$ (x is 0-0.03, a is 0.3-0.95, b is 0.01-0.35, c is 0.01-0.5, a + b + c = 1); lithium nickel-manganese-cobalt oxides partially substituted with aluminum, $Li_a[Ni_bCo_cMn_dAl_e]_{1-f}M1_fO_2$ (wherein $M^1$ is at least one selected from the group consisting of Zr, B, W, Mg, Ce, Hf, Ta, La, Ti, Sr, Ba, F, P and S, $0.8 \leq a \leq 1.2$, $0.5 \leq b \leq 0.99$, $0 < c < 0.5$, $0 < d < 0.5$, $0.01 \leq e \leq 0.1$, and $0 \leq f \leq 0.1$); lithium nickel-manganese-cobalt oxides partially substituted with another transition metal, $Li_{1+x}(Ni_aCo_bMn_cM_d)_{1-x}O_2$ (wherein x is 0-0.03, a is 0.3-0.95, b is 0.01-0.35, c is 0.01-0.5, d is 0.001-0.03, a + b + c + d = 1, M is any one selected from the group consisting of Fe, V, Cr, Ti, W, Ta, Mg and Mo); disulfide compounds; $Fe_2(MoO_4)_3$; or the like.

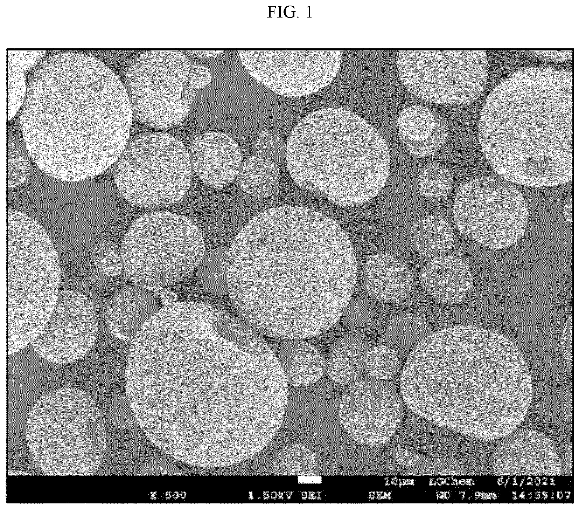

FIG. 1 illustrates a scanning electron microscopic (SEM) image of the positive electrode granule according to an embodiment of the present disclosure. The SEM image is obtained with a magnification of 500X.

Referring to FIG. 1, the positive electrode granule according to an embodiment of the present disclosure may include a main domain having a dented portion from the surface to a predetermined depth toward the center, a sub-domain disposed in the dented portion, and a hollow portion formed between the main domain and the sub-domain.

According to an embodiment of the present disclosure, in the method for preparing a positive electrode granule, the dented portion is formed in the surface of the positive electrode granule while allowing the solvent enclosed inside the granule to evaporate upon the formation of the positive electrode granule, and a granule having a small size may be supported in the dented portion, but the method is not limited thereto. In this manner, the positive electrode granule may include a main domain having a dented portion, a sub-domain disposed in the dented portion, and a hollow portion formed between the main domain and the sub-domain.

According to an embodiment of the present disclosure, the positive electrode granule may include a large-particle diameter granule forming the main domain, and a small-particle diameter granule forming the sub-domain. Herein, one small-particle diameter granule may be contained in the sub-domain, but a plurality of small-particle diameter granules may be contained therein.

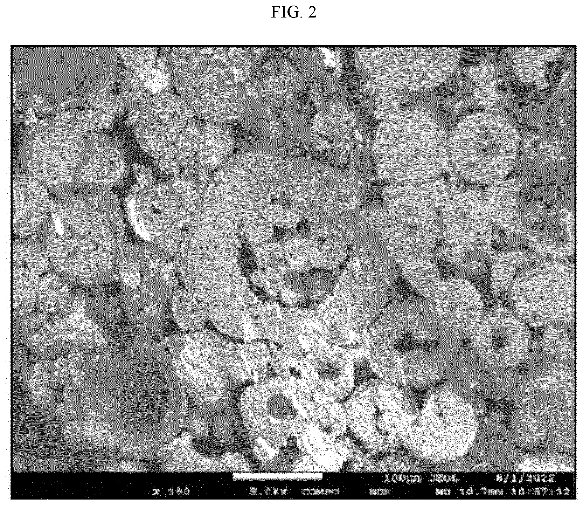

FIG. 2 is a scanning electron microscopic (SEM) image illustrating the cross-section of the positive electrode granule according to an embodiment of the present disclosure. The SEM image is obtained at a magnification of 150X.

Referring to FIG. 2, it can be seen that the positive electrode granule includes a main domain having a hollow portion therein, and a sub-domain including a plurality of small-particle diameter granules contained in the hollow portion. As such, the positive electrode granule may include a large-particle diameter granule forming the main domain and a plurality of small-particle diameter granules forming the sub-domain, wherein the hollow portion is formed between the main domain and the sub-domain.

According to an embodiment of the present disclosure, the lithium iron phosphate-based compound may have an average particle diameter ($D_{50}$) of 100-500 nm, particularly 200-300 nm.

When forming a positive electrode by using a lithium iron phosphate-based compound as a positive electrode active material according to the related art, there have been reported the problems in that the lithium iron phosphate-based compound shows high packing density and low lithium-ion diffusion rate and electrical conductivity due to the small particle size thereof. To solve such problems, according to an embodiment of the present disclosure, there is provided a composite particle-type positive electrode granule including the lithium iron phosphate-based compound having the above-defined range of size and bound by the binder. Herein, the positive electrode granule may have an average particle diameter ($D_{50}$) of 20-300 $\mu$m, particularly 20-250 $\mu$m, 20-200 $\mu$m, 20-150 $\mu$m, 20-100 $\mu$m, 25-80 $\mu$m, 30-75 $\mu$m, 30-70 $\mu$m, 30-60 $\mu$m, 30-50 $\mu$m, 40-75 $\mu$m, 50-75 $\mu$m, or 60-80 $\mu$m. In the present specification, when the positive electrode granule includes a main domain and a sub-domain, the size of the positive electrode granule may refer to the size of the main domain, i.e., the size of a large-particle diameter granule.

According to an embodiment of the present disclosure, when the positive electrode granule has a structure including a main domain, a sub-domain and a hollow portion, the dented portion formed in the main domain may have a circular shape with a diameter of the dented portion of 10-150 $\mu$m. Particularly, the dented portion may have a diameter of 10-110 $\mu$m, 10-100 $\mu$m, 10-80 $\mu$m, 10-60 $\mu$m, 10-50 $\mu$m, 10-30 $\mu$m, 10-20 $\mu$m, 10-15 $\mu$m, or 15-20 $\mu$m. The term 'circular shape' covers not only a shape of a collection of points having equal radius from the center, as in the general definition of a circle, but also a shape of a similar circle, such as an ellipse, a squashed circle, etc.

According to an embodiment of the present disclosure, when the positive electrode granule has a structure including a main domain, a sub-domain and a hollow portion, the small-particle diameter granule forming the sub-domain may have an average particle diameter ($D_{50}$) of 5-50 $\mu$m, 5-40 $\mu$m, 10-30 $\mu$m, 15-25 $\mu$m, or 15-20 $\mu$m.

As used herein, 'particle diameter ($D_{50}$)' means the particle diameter at the point of 50% in the particle number accumulated distribution as a function of particle diameter. The particle diameter may be determined by using the laser diffraction method. Particularly, a powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, $D_{50}$ may be determined by calculating the particle diameter at the point of 50% in the particle number accumulated distribution depending on particle diameter in the analyzer system.

As used herein, 'diameter' of the dented portion may be determined through an SEM image or Hg porosimetry.

According to the present disclosure, the binder is distributed uniformly in the central portion and surface portion of the positive electrode granule. Particularly, the positive electrode granule may have a QBR (Quantified Binder Ratio) value ranging from 0.8 to 1.2, as determined according to the following formula 1:

[Formula 1]

$$QBR = Bs/Bf,$$

wherein Bs represents the average value of binder content in the region between the outermost surface of the positive electrode granule and up to 15% of the particle radius of the positive electrode granule, and Bf represents the average value of binder content in the region between the internal center of the positive electrode granule and up to 15% of the particle radius of the positive electrode granule.

According to the definition of Formula 1, as the QBR value approaches 1, the binder is distributed uniformly in the surface portion and central portion of the positive electrode granule. The positive electrode granule according to an embodiment of the present disclosure may have a QBR value ranging from 0.85 to 1.15, from 0.9 to 1.1, or from 0.95 to 1.05, but the scope of the present disclosure is not limited thereto.

According to an embodiment of the present disclosure, the binder content for the determination of QBR may be determined by measuring the content of an element unique to the binder used herein, or by measuring the content of a functional group unique to the binder. For example, when using a fluorine-based binder as described hereinafter, the binder content may be determined by measuring the fluorine element content. Herein, the fluorine element content may be measured through FT-IR analysis, or the like.

Herein, the sphericity of the positive electrode granule may be a value obtained by projecting the positive electrode granule, and dividing the circumference of a circle having the same area as the projected image by the circumferential length of the projected image. Particularly, the sphericity may be represented by the following Mathematical Formula 1. The sphericity may be determined by using a particle shape analyzer, such as a particle shape analyzer, including sysmex FPIA3000 available from Malvern Co.

Sphericity = (Circumference of circle having the same area as projected image of positive electrode granule/Circumferential length of projected image) X 100    [Mathematical Formula 1]

As used herein, the density of the positive electrode granule may be calculated by acquiring the volume of the positive electrode granule through the average particle diameter thereof, measuring the weight of the positive electrode granule, and calculating the ratio of weight/volume.

The binder by which the positive electrode active material and/or the conductive material is bound is not particularly limited, as long as it is a binder that may be used conventionally as a binder for a positive electrode.

According to an embodiment of the present disclosure, the binder may include a hydrophobic binder. According to the present disclosure, a hydrophobic binder may be used preferably as a binder for binding the lithium iron phosphate-based compound in order to prevent or improve the problem of adsorption of water to the lithium iron phosphate-based compound and decomposition thereof.

According to an embodiment of the present disclosure, the binder, particularly, the hydrophobic binder may include a fluorine-based binder.

The fluorine-based binder is a binder containing at least one fluorine (F) atom in the structure, and particular examples thereof may include, but are not limited to: polyvinylidene fluoride (PVDF), polyvinylidene fluoride-co-hexafluoropropylene (PVDF-HFP), polytetrafluoroethylene (PTFE), or a mixture of two or more of them. When forming a positive electrode granule by using the fluorine-based binder to aggregate and bind the positive electrode active material particles, it is possible to provide an advantageous effect of inhibiting and preventing adsorption of water to the surface of the positive electrode granule. In addition, when using the fluorine-based binder, it is possible to provide an advantageous effect in terms of the improvement of the binding force in the positive electrode active material and the adhesion between the positive electrode granule and the current collector. However, the scope of the present disclosure is not limited thereto.

According to an embodiment of the present disclosure, it is possible to provide an advantageous effect in terms of the stabilization of the lithium iron phosphate-based compound, when using a hydrophobic binder, such as a fluorine-based binder, rather than a conventional hydrophilic binder, such as polyacrylonitrile (PAN), or the like.

According to an embodiment of the present disclosure, the positive electrode granule may further include a conductive material, if necessary, besides the positive electrode active material and the binder. When the positive electrode granule further includes a conductive material, the conductive material may be fixed by the binder through the binding between the conductive material and the positive electrode active material particles, or the binding of the conductive material particles.

The conductive material is not particularly limited, as long as it has electrical conductivity while not causing any chemical change in the corresponding battery.

According to an embodiment of the present disclosure, particular examples of the conductive material may include, but are not limited to: graphite, such as natural graphite or artificial graphite; carbon black-based carbonaceous compound, such as carbon black, acetylene black, ketjen black, channel black, furnace black, lamp black or thermal black; conductive fibers, such as carbon fibers or metal fibers; fluorocarbon; metal powder, such as aluminum or nickel powder; conductive whisker, such as zinc oxide or potassium titanate; conductive metal oxide, such as titanium dioxide;

conductive polymer such as a polyphenylene derivative; or the like.

According to an embodiment of the present disclosure, it is possible to provide a novel type of positive electrode material including a lithium iron phosphate-based compound as a positive electrode active material through the positive electrode granule as described above.

In another aspect of the present disclosure, there is provided a method for preparing the above-described positive electrode granule.

The positive electrode granule may be prepared by mixing the positive electrode active material with the binder and carrying out granulation through a spray drying process, but the preparation of the positive electrode granule is not limited thereto.

The method includes the steps of: adding a positive electrode active material and a binder to a dispersion medium to prepare a slurry; and carrying out spray drying of the slurry, wherein the positive electrode active material includes a lithium iron phosphate-based compound.

First, the electrode active material and the binder, and optionally, a conductive material and an additive are dispersed or dissolved in a dispersion medium (solvent for the electrode binder) to obtain a slurry including the electrode active material and the binder dispersed or dissolved therein.

The dispersion medium used to obtain the slurry may be water, most suitably, but an organic solvent may also be used. Particular examples of the organic solvent include: an alkyl alcohol, such as methyl alcohol, ethyl alcohol or propyl alcohol; alkyl ketone, such as acetone or methyl ethyl ketone; ether, such as tetrahydrofuran, dioxane or diglyme; amide, such as diethylformamide, dimethylacetoamide, N-methyl-2-pyrrolidone (also referred to as NMP hereinafter) or dimethyl imidazolidinone; sulfur-based solvent, such as dimethyl sulfoxide or sulfolane; or the like. However, the organic solvent is an alcohol, preferably. When an organic solvent having a lower boiling point as compared to water is used in combination, it is possible to increase the drying rate during fluidization granulation. In addition, since the dispersibility or solubility of the binder may be changed, the viscosity or flowability of the slurry may be controlled depending on the amount or type of the dispersion medium to improve the production efficiency.

The amount of the dispersion medium used when preparing the slurry may be generally such an amount that the solid content of the slurry may be 1-50 wt%, 5-50 wt% or 10-30 wt%.

The method or order of dispersing or dissolving the positive electrode active material, the binder, or the like, is not particularly limited. For example, such methods may include a method of adding the electrode active material and the binder to the dispersion medium and mixing them, a method of dissolving or dispersing the binder in the dispersion medium, adding the positive electrode active material finally and mixing them, or the like. When the slurry includes a conductive material and/or an additive, such ingredients may be introduced during the introduction of the positive electrode active material. Particular examples of the mixing means may include a mixing system, such as a ball mill, a sand mill, a bead mill, a pigment dispersion system, a stone mill, an ultrasonic dispersion system, a homogenizer, a planetary mixer, or the like. For example, the mixing may be carried out at a temperature ranging from room temperature to 80°C for 10 minutes to several hours.

Next, the slurry is spray dried. The spray drying method includes spraying and drying the slurry in hot air. Typical examples of the systems used for a spray drying process include atomizers. The atomizers may be classified into those for a rotary disc process and those for a pressurization process. The rotary disc process includes introducing the slurry substantially to the center of a disc rotating at a high speed, allowing the slurry to be located outside of the disc by the centrifugal force of the disc, and drying the slurry at that time in a fog-like phase. The disc rotation speed depends on the size of the disc, but generally may be 5,000-35,000 rpm, preferably 15,000-30,000 rpm. Meanwhile, the pressurization process includes pressurizing the slurry and drying the slurry in a fog-like phase from a nozzle.

The temperature of the sprayed slurry is generally room temperature, but may be warmed to a temperature higher than room temperature. The hot air temperature during spray drying may be controlled to 80-250°C, preferably 100-200°C. In the spray drying method, the method for hot air suction is not particularly limited. For example, the hot air suction method may include a method using hot air flowing in parallel with the direction of spraying in the horizontal direction, a method of spraying slurry near the top of a drying tower and allowing the sprayed slurry to drop together with hot air, a method of allowing the sprayed drops to be in contact with hot air in a counter-current mode, a method of allowing the sprayed drops to flow in parallel with initial hot air first, and then to drop by gravity so that they may be contact with hot air in a counter-current mode, or the like.

In addition, the product, i.e. granule, obtained from the spray drying, may be optionally heat treated in order to cure the surface thereof, wherein the heat treatment temperature may be generally 80-300°C.

In still another aspect of the present disclosure, there is provided a positive electrode using the above-described positive electrode granule.

The positive electrode includes a current collector, and a positive electrode active material layer disposed on the current collector, wherein the positive electrode active material layer includes a plurality of the positive electrode granules as described above.

According to an embodiment of the present disclosure, the positive electrode active material layer includes a plurality of the positive electrode granules integrated in a layered structure, has a plurality of fine pores provided by the interstitial volumes which are spaces among the positive electrode granules, and shows porous property derived from such a structure. Herein, the ion diffusion rate of the positive electrode active material layer may be determined by some factors, such as the size and number of the fine pores, and the capacity of the positive electrode active material layer may be determined by the packing density of the granules.

Herein, 'porosity' of the positive electrode active material layer refers to a ratio of the volume occupied by pores based on the total volume in the positive electrode active material layer. The porosity may be expressed in the unit of vol%, and may be used interchangeably with such terms as pore ratio, porous degree, or the like.

For example, the porosity of the electrode may be determined by the Brunauer-Emmett-Teller (BET) method using nitrogen gas or Hg porosimetry and according to ASTM D-2873. Further, the net density of an electrode may be calculated from the density (apparent density) of the electrode and the compositional ratio of ingredients contained in the electrode and density of each ingredient, and the porosity of the electrode may be calculated from the difference between the apparent density and the net density. For example, the porosity may be calculated according to the following Formula 3:

[Formula 3]

$$\text{Porosity (vol\%)} = \{1 - (\text{Apparent density/Net density})\} \times 100$$

In Formula 3, the apparent density may be calculated according to the following Formula 4:

Apparent density (g/cm$^3$) = (Weight (g) of positive electrode active material layer) / {(Thickness (cm) of positive electrode active material layer) x (Area (cm$^2$) of posivite electrode active material layer)} [Formula 4]

According to an embodiment of the present disclosure, the positive electrode granule inhibits water adsorption on the surface thereof, and thus can provide an effect of inhibiting elution of iron (Fe) from the positive electrode active material, caused by the reaction with water.

According to an embodiment of the present disclosure, the positive electrode using the above-described positive electrode granule may provide an effect of increasing the ion diffusion rate as compared to the positive electrode using a lithium iron phosphate-based compound as a positive electrode active material according to the related art. For example, the ion diffusion rate may be determined by using the method of Galvanostatic Intermittent Titration Technique (GITT) in a charged/discharged state. According to an embodiment of the present disclosure, the ion diffusion rate may be determined by the method of GITT under the condition of SOC 50% and may be expressed in the unit of cm$^2$/s, but is not limited thereto. The ion diffusion rate means a degree of diffusion of ions in a specific material. Particularly, unless otherwise stated herein, the ion diffusion rate means a lithium-ion diffusion rate.

Herein, the total 'thickness' of the positive electrode active material layer, or 'thickness' of each layer contained therein may refer to a value determined by a known method. The thickness may be a value measured by using a thickness gauge (VL-50S-B, available from Mitutoyo), but is not limited thereto.

According to an embodiment of the present disclosure, the current collector is not particularly limited, as long as it has high conductivity, while not causing any chemical change in the corresponding battery. Particular examples of the current collector include stainless steel, aluminum, nickel, titanium, baked carbon, copper or stainless steel surface-treated with carbon, nickel, titanium, silver, or the like. In addition, fine surface irregularities may be formed on the surface of the current collector to enhance the binding force with the positive electrode active material. The current collector may be used in various shapes, including a film, sheet, a foil, a net, a porous body, a foamed body, a nonwoven web, or the like. Meanwhile, according to an embodiment of the present disclosure, the current collector may have a thickness of 10-50 μm, but is not limited thereto. For example, the current collector may have a thickness of 10-20 μm.

According to an embodiment of the present disclosure, the current collector may have a primer layer on at least one surface thereof, and the surface may be totally or partially coated with the primer layer. The primer layer may be introduced to improve the binding force between the current collector and the positive electrode active material layer and electrical conductivity. The primer layer may include a binder and a conductive material. Reference will be made to the above description of the binder and the conductive material of the positive electrode active material layer about the binder and the conductive material of the primer layer.

According to an embodiment of the present disclosure, besides the binder and the conductive material, the primer layer may further include a dispersing agent for dispersing such ingredients.

According to an embodiment of the present disclosure, the primer layer including the above-mentioned ingredients may have a thickness of 300 nm to 1.5 $\mu$m, particularly 700 nm to 1.3 $\mu$m, but is not limited thereto.

According to an embodiment of the present disclosure, the positive electrode may be obtained through a method including a step of forming a positive electrode active material layer on at least one surface of a current collector.

According to an embodiment of the present disclosure, the positive electrode active material layer may be formed with no use of a separate solvent by applying the positive electrode granule to one surface of the current collector, and then carrying out pressing, but the method for manufacturing the positive electrode is not limited thereto.

According to an embodiment of the present disclosure, the temperature and pressure conditions in each of the step of applying the granule and the step of carrying out pressing, in manufacturing the positive electrode, are not particularly limited, and any conventional conditions may be used.

In yet another aspect of the present disclosure, there is provided an electrochemical device including a positive electrode, a negative electrode, a separator interposed between the positive electrode and the negative electrode and an electrolyte, wherein the positive electrode is the above-described positive electrode.

According to an embodiment of the present disclosure, the negative electrode, the separator and the electrolyte are not particularly limited, as long as they may be used for a conventional electrochemical device without detracting from the objects of the present disclosure. Therefore, detailed description of the separator and the electrolyte will be omitted herein.

According to an embodiment of the present disclosure, the outer shape of the electrochemical device may be selected from a coin-like shape, a cylindrical shape, a pouch-like shape or a prismatic shape with no particular limitation. In addition, the electrochemical device may be used not only for a battery cell used as a power source of a compact device but also for a unit cell in a middle- or large-scale battery module including a plurality of battery cells, and the application thereof is not particularly limited.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

Preparation of Positive Electrode Granule and Positive Electrode

The positive electrode according to each of Examples 1 and 2 and Comparative Example 1 was obtained as follows.

**Example 1**

[Preparation of Positive Electrode Granule]

LFP (LiFePO$_4$) as an electrode active material, carbon black (Super C65) as a conductive material and polyvinylidene fluoride (PVDF) as a binder were mixed with water as a dispersion medium through a homogenizer to prepare a slurry.

The resultant slurry was dried by using a spray dryer to obtain a positive electrode granule including a plurality of the positive electrode active material and conductive material particles, and the binder by which the positive electrode active material and the conductive material particles are bound. Herein, the spray dryer was controlled to a raw material feed rate of 30 rpm, spraying mode of disc type and a rotation speed of 5,000 rpm.

The resultant positive electrode granules were sieved by using an industrial sieve to separate and remove macropowder having a size of larger than 100 $\mu$m and micropowder having a size smaller than 50 $\mu$m. In this manner, positive electrode granules having a size of 50-100 $\mu$m were obtained.

FIG. 1 and FIG. 2 are scanning electron microscopic (SEM) images of the positive electrode granules. The resultant positive electrode granules have an average particle diameter (D$_{50}$) of 75 $\mu$m. Referring to FIG. 1 and FIG. 2, it can be seen that the positive electrode granule has a circular-shaped dented portion having an average diameter of 15 $\mu$m from the surface toward the center, and micro-granules having an average particle diameter (D$_{50}$) of 8 $\mu$m are contained in the dented portion.

[Manufacture of Positive Electrode]

The positive electrode granules obtained as described above were applied to an aluminum current collector, and pressing was carried out at a linear pressure of 1 ton to form a positive electrode active material layer, thereby providing a positive electrode (loading amount 550 mg/25 cm$^2$, thickness 115 $\mu$m).

**Example 2**

A positive electrode was obtained in the same manner as Example 1, except that the raw material feed rate was controlled to 30 rpm, the spraying mode was disc type and the rotation speed was controlled to 10,000 rpm to obtain positive electrode granules having a size of 10-50 $\mu$m (average particle diameter ($D_{50}$): 30 $\mu$m).

**Comparative Example 1**

A positive electrode was obtained by applying LFP (LiFePO$_4$), instead of the positive electrode granules, onto the current collector at the same amount as the positive electrode granules.

Evaluation of Physical Properties of Electrode

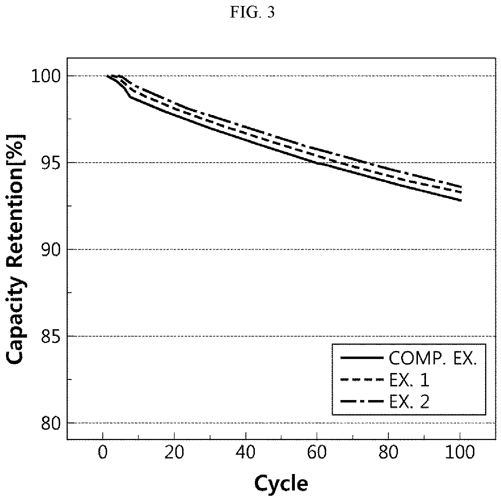

The positive electrode obtained according to each of Examples 1 and 2 and Comparative Example 1 was evaluated in terms of life characteristics as follows. The results are shown in the following Table 1 and FIG. 3.

First, the positive electrode obtained as described above was prepared, and a negative electrode (thickness 60 $\mu$m) using graphite on a current collector was prepared. Then, a porous polyethylene membrane (thickness: 15 $\mu$m) was interposed between the positive electrode and the negative electrode to obtain an electrode assembly. The electrode assembly was received in a battery casing, and an electrolyte was injected to the electrode assembly to obtain a lithium secondary battery. Herein, the electrolyte was prepared by dissolving 1 M lithium hexafluorophosphate (LiPF$_6$) in an organic solvent including ethylene carbonate, ethyl methyl carbonate and diethyl carbonate (EC/EMC/DEC mixing ratio of 3/4/3 (volume ratio)).

Each lithium secondary battery cell was charged to at 0.33 C to 3.6 V in a constant current (CC)/constant voltage (CV) mode at 45°C and discharged at a constant current of 0.33 C. In this manner, a charge/discharge test was carried out for 100cycles, and the capacity retention was determined.

[Table 1]

|  | Positive Electrode Material | Capacity Retention (%) (after 100 cycles) |
|---|---|---|
| Ex. 1 | LFP Positive electrode granules | 93.2 |
| Ex. 2 | LFP Positive electrode granules | 93.5 |
| Comp. Ex. 1 | LFP | 92.7 |

Referring to Table 1 and FIG. 3, use of the positive electrode granules prepared by using a lithium iron phosphate-based positive electrode active material can improve the life characteristics of a battery using a lithium iron phosphate-based material.

Evaluation of Eluted Amount of Iron (Fe)

The amount of iron (Fe) eluted in the battery using the positive electrode obtained according to each of Example 1 and Comparative Example 1 was determined. The results are shown in the following Table 2.

The eluted amount of iron was evaluated by separating the negative electrode from the battery and carrying out inductively coupled plasma (ICP) elemental analysis of the negative electrode to determine the content of Fe.

[Table 2]

|  | Element (mg/kg) | | | | | | | | | | |
|---|---|---|---|---|---|---|---|---|---|---|---|
|  | Fe | Al | Ca | Co | Cr | Cu | Mg | Mn | Na | Ni | Zn |
| Ex. 1 | 20 | 160 | 100 | <5 | <5 | 460 | 20 | <5 | 365 | <5 | <5 |
| Comp. Ex. 1 | 35 | 155 | 45 | <5 | <5 | 145 | 20 | <5 | 180 | <5 | <5 |

Referring to the result of Table 2, it is thought that elution of iron can be inhibited by using the positive electrode according to an embodiment of the present disclosure to inhibit adsorption of water to the positive electrode surface, and thus the life characteristic of a battery using lithium iron phosphate (LFP) can be improved upon the operation of the battery.

**Claims**

1. A positive electrode granule comprising a positive electrode active material and a binder,

    wherein the positive electrode active material comprises a lithium iron phosphate-based compound,
    the positive electrode active material is bound by the binder,
    the binder is distributed uniformly at the central portion and surface portion of the positive electrode granule, and
    the surface portion is a region near the granule surface from the granule surface to a predetermined depth toward the center of the granule, and the central portion is a region other than the surface portion.

2. The positive electrode granule according to claim 1, wherein the binder comprises a hydrophobic binder.

3. The positive electrode granule according to claim 1, which comprises:

    a main domain having a dented portion from the surface to a predetermined depth toward the center;
    a sub-domain disposed in the dented portion; and
    a hollow portion formed between the main domain and the sub-domain.

4. The positive electrode granule according to claim 1, which has an average particle diameter ($D_{50}$) of 20-300 $\mu$m.

5. The positive electrode granule according to claim 1, which has a QBR (Quantified Binder Ratio) value ranging from 0.8 to 1.2, as determined according to the following formula 1:

$$[\text{Formula 1}]$$

$$QBR = Bs/Bf,$$

    wherein Bs represents the average value of binder content in the region between the outermost surface of the positive electrode granule and up to 15% of the particle radius of the positive electrode granule, and Bf represents the average value of binder content in the region between the internal center of the positive electrode granule and up to 15% of the particle radius of the positive electrode granule.

6. The positive electrode granule according to claim 3, wherein the dented portion of the positive electrode granule has a circular shape with a dimeter of 10-150 $\mu$m.

7. The positive electrode granule according to claim 1, wherein the binder comprises a fluorine-based binder.

8. The positive electrode granule according to claim 1, wherein the binder comprises polyvinylidene fluoride (PVDF), polyvinylidene fluoride-co-hexafluoropropylene (PVDF-HFP), polytetrafluoroethylene (PTFE), or a mixture of two or more of them.

9. The positive electrode granule according to claim 1, which further comprises a conductive material, and the positive electrode active material and the conductive material are bound by the binder.

10. A method for preparing a positive electrode granule, comprising the steps of:

    adding a positive electrode active material and a binder to a dispersion medium to prepare a slurry; and
    spray drying the slurry,
    wherein the positive electrode active material comprises a lithium iron phosphate-based compound.

11. The method for preparing a positive electrode granule according to claim 10, wherein the binder comprises a hydrophobic binder.

12. The method for preparing a positive electrode granule according to claim 10, wherein the binder comprises a fluorine-based binder.

13. The method for preparing a positive electrode granule according to claim 10, wherein the binder comprises polyvinylidene fluoride (PVDF), polyvinylidene fluoride-co-hexafluoropropylene (PVDF-HFP), polytetrafluoroethylene (PTFE), or a mixture of two or more of them.

14. A positive electrode comprising a current collector, and a positive electrode active material layer disposed on the current collector, wherein the positive electrode active material layer comprises a plurality of the positive electrode granules as defined in any one of claims 1 to 9.

15. An electrochemical device comprising a positive electrode, a negative electrode, a separator interposed between the positive electrode and the negative electrode, and an electrolyte, wherein the positive electrode comprises the positive electrode as defined in claim 14.

FIG. 1

FIG. 2

FIG. 3

## INTERNATIONAL SEARCH REPORT

| International application No. |
|---|
| **PCT/KR2023/013029** |

### A. CLASSIFICATION OF SUBJECT MATTER

**H01M 4/58**(2010.01)i; **H01M 4/36**(2006.01)i; **H01M 4/62**(2006.01)i; **H01M 4/04**(2006.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/58(2010.01); C01D 15/00(2006.01); F27B 9/26(2006.01); F27B 9/30(2006.01); H01M 4/02(2006.01); H01M 4/04(2006.01); H01M 4/485(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive active material), 그래뉼(granule), 바인더(binder), 리튬철인산계(LFP), 전극(electrode), 슬러리(slurry)

### C. DOCUMENTS CONSIDERED TO BE RELEVANT

| Category* | Citation of document, with indication, where appropriate, of the relevant passages | Relevant to claim No. |
|---|---|---|
| X | JP 6583266 B2 (NIPPON ZEON CO., LTD.) 02 October 2019 (2019-10-02)<br>See abstract, claim 1, and paragraphs [0005], [0020], [0023] and [0090]. | 10-13 |
| A | | 1-9,14,15 |
| A | KR 10-2021-0079758 A (POSCO et al.) 30 June 2021 (2021-06-30)<br>See claims 1-9. | 1-15 |
| A | KR 10-2015-0120803 A (HANWHA CHEMICAL CORPORATION) 28 October 2015 (2015-10-28)<br>See claims 1-7. | 1-15 |
| A | KR 10-2018-0027896 A (SAMSUNG SDI CO., LTD.) 15 March 2018 (2018-03-15)<br>See claims 1-9. | 1-15 |
| A | KR 10-2007-0082902 A (LG CHEM, LTD. et al.) 22 August 2007 (2007-08-22)<br>See claims 1-16. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 December 2023** | **18 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| JP | 6583266 | B2 | 02 October 2019 | CN | 106233507 | A | 14 December 2016 |
| | | | | CN | 106233507 | B | 16 August 2019 |
| | | | | KR | 10-2016-0146737 | A | 21 December 2016 |
| | | | | KR | 10-2311781 | B1 | 08 October 2021 |
| | | | | WO | 2015-166777 | A1 | 05 November 2015 |
| KR | 10-2021-0079758 | A | 30 June 2021 | CN | 114829860 | A | 29 July 2022 |
| | | | | EP | 4080148 | A1 | 26 October 2022 |
| | | | | JP | 2023-507818 | A | 27 February 2023 |
| | | | | KR | 10-2368361 | B1 | 23 February 2022 |
| | | | | US | 2023-0053769 | A1 | 23 February 2023 |
| | | | | WO | 2021-125628 | A1 | 24 June 2021 |
| KR | 10-2015-0120803 | A | 28 October 2015 | | None | | |
| KR | 10-2018-0027896 | A | 15 March 2018 | WO | 2018-048174 | A1 | 15 March 2018 |
| KR | 10-2007-0082902 | A | 22 August 2007 | CN | 101426728 | A | 06 May 2009 |
| | | | | CN | 101426728 | B | 03 October 2012 |
| | | | | JP | 2009-526736 | A | 23 July 2009 |
| | | | | JP | 5377981 | B2 | 25 December 2013 |
| | | | | KR | 10-0838987 | B1 | 10 June 2008 |
| | | | | TW | 200810202 | A | 16 February 2008 |
| | | | | TW | I335687 | A | 01 January 2011 |
| | | | | TW | I335687 | B | 01 January 2011 |
| | | | | US | 2010-0227222 | A1 | 09 September 2010 |
| | | | | US | 8206852 | B2 | 26 June 2012 |
| | | | | WO | 2007-094645 | A1 | 23 August 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220110412